# EUROPEAN PATENT APPLICATION

(11) **EP 4 725 720 A1**
(43) Date of publication of application: **15.04.2026**
(21) Application number: 24922317.3
(22) Date of filing: 31.01.2024
(51) Int. Cl.: B60C 29/02, B60C 23/04, F16K 15/20

(54) **TIRE VALVE AND TILT RESTRICTION MEMBER**

(71) Applicant: Pacific Industrial Co., Ltd., Ogaki-shi, Gifu 503-8603 (JP)
(72) Inventor: ISOWA Hiroki, Ogaki-shi, Gifu 503-8603 (JP); MIZUNO Takahiro, Ogaki-shi, Gifu 503-8603 (JP); AIMOTO Masatoshi, Ogaki-shi, Gifu 503-8603 (JP)
(74) Representative: Kramer Barske Schmidtchen Patentanwälte PartG mbB
(86) International application number: PCT/JP2024/002966
(87) International publication number: WO 2025/163778

(57) **Abstract**

[Problem] Provided is a technique capable of fixing a tire valve to a rim more stably than before.

[Solution] A tire valve 10A of the present disclosure includes: a valve stem 30A configured to house a valve core 20; a press-fit member 40A made of an elastomer configured to cover an outer side surface of the valve stem 30A and to be press-fitted into a valve mounting hole 92 of a rim 91 of a wheel 90 from an inner surface side of the rim 91 so as to be attached in a state of passing through the rim 91 from inside to outside; and a tilt restriction member 50A including a retaining-fixing portion (specifically, a female threaded portion 54N) fixed to the valve stem 30A so as to be prevented from disengagement, the tilt restriction member 50A being partially laid on the inner surface of the rim 91.

## Description

### TECHNICAL FIELD

The present disclosure relates to a tire valve attached to a wheel and a tilt restriction member used for the tire valve.

### BACKGROUND ART

As this type of conventional tire valve, a tire valve is known that is press-fitted and attached to a valve mounting hole of a wheel (usually referred to as "snap-in valve") (see, for example, Patent Document 1).

### RELATED ART DOCUMENTS

### PATENT DOCUMENTS

Patent Document 1: JP 2007-153298 A (paragraph [0039], FIG. 8)

### SUMMARY OF THE INVENTION

### PROBLEMS TO BE SOLVED BY THE INVENTION

However, the conventional tire valve described above may tilt due to a centrifugal force during tire rotation. Hence, the present application provides a technique capable of fixing a tire valve to a rim more stably than before.

### MEANS OF SOLVING THE PROBLEMS

A tire valve according to one aspect of the present disclosure made to solve the above problem is a tire valve including: a valve stem configured to house a valve core; a press-fit member made of an elastomer configured to cover an outer side surface of the valve stem and to be press-fitted into a valve mounting hole of a rim of a wheel from an inner surface side of the rim so as to be attached in a state of passing through the rim from inside to outside; and a tilt restriction member including a retaining-fixing portion fixed to the valve stem so as to be prevented from disengagement, the tilt restriction member being partially laid on the inner surface of the rim.

### BRIEF DESCRIPTION OF THE DRAWINGS

[FIG. 1] FIG. 1 is a cross-sectional side view of a tire valve and a wheel according to a first embodiment.
[FIG. 2] FIG. 2 is a cross-sectional side view of a tire valve body and a tilt restriction member.
[FIG. 3] FIG. 3A is an enlarged cross-sectional side view of a proximal end portion of a tire valve according to a second embodiment, and FIG. 3B is a front view of a tilt restriction member thereof.
[FIG. 4] FIG. 4A is an enlarged cross-sectional side view of a proximal end portion of a tire valve according to a third embodiment, and FIG. 4B is an enlarged cross-sectional side view of a proximal end portion of a tire valve according to a fourth embodiment.
[FIG. 5] FIG. 5 is an enlarged cross-sectional side view of a proximal end portion of a tire valve according to a fifth embodiment.

### MODE FOR CARRYING OUT THE INVENTION

### [First embodiment]

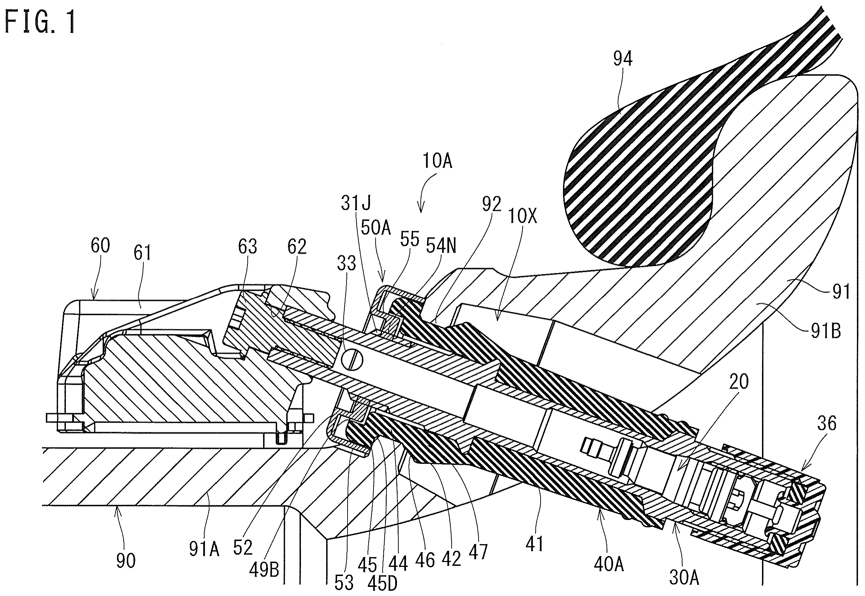

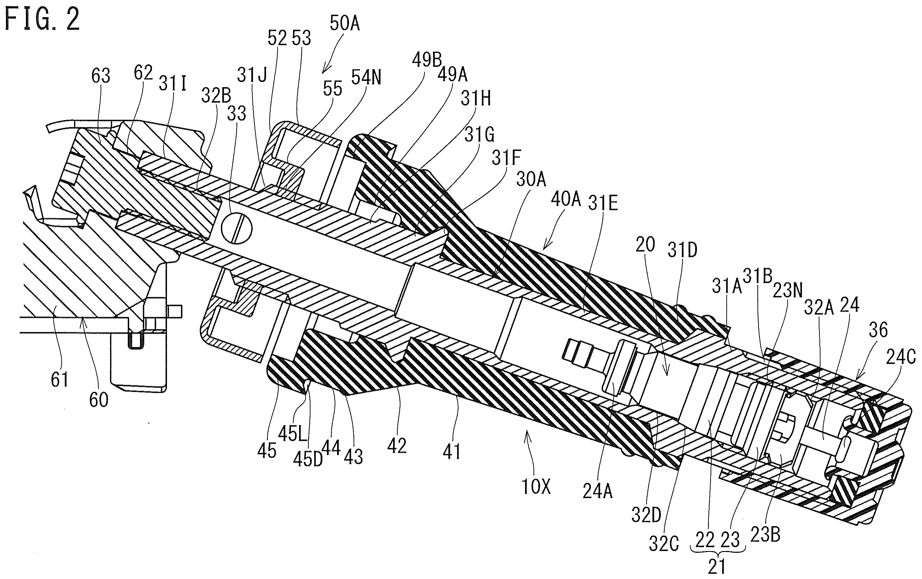

A tire valve 10A according to a first embodiment will be described with reference to FIGS. 1 and 2. As illustrated in FIG. 1, the tire valve 10A of the present embodiment is formed by attaching a tilt restriction member 50A, a state monitoring device 60, a cap 36, and the like to a tire valve body 10X.

First, the tire valve body 10X will be described. Here, an end portion on the right side of the tire valve body 10X in FIGS. 1 and 2 is a "distal end portion", and the opposite side is a "proximal end portion". Hereinafter, also in each component of the tire valve 10A, the right side in FIGS. 1 and 2 is referred to as "distal end side", and the opposite side is referred to as "proximal end side" similarly to the tire valve body 10X.

As illustrated in FIG. 2, the tire valve body 10X includes a valve core 20, a valve stem 30A that houses the valve core 20, and a press-fit member 40A that covers an intermediate portion of the valve stem 30A in the longitudinal direction.

The valve stem 30A is, for example, a pipe made of metal, and on an outer surface of the valve stem 30A, a step portion 31D is provided at a position near a distal end. A flange 31F is provided at a position slightly closer to the proximal end side relative to the center in the longitudinal direction. The distal end side from the step portion 31D on the outer surface of the valve stem 30A is a distal end-side large-diameter portion 31A, and a threaded portion 31B to which the cap 36 is attached by threaded engagement is formed thereon. An intermediate small-diameter portion 31E extending with a uniform outer diameter is formed between the step portion 31D and the flange 31F on the outer surface of the valve stem 30A. On the proximal end side from the flange 31F on the outer surface of the valve stem 30A, a first medium-diameter portion 31G, a second medium-diameter portion 31H, and a proximal end-side small-diameter portion 31I are provided in order of proximity to the flange 31F, to gradually decrease in diameter toward the proximal end side. A male threaded portion 31J is formed on substantially half of the second medium-diameter portion 31H on the proximal end side.

Female threaded portions 32A and 32B are provided on an inner side of the valve stem 30A at a distal end portion and a proximal end portion. On the inner side of the distal end-side large-diameter portion 31A of the valve stem 30A, a tapered portion 32C and a minimum inner diameter portion 32D are provided on the proximal end side from the female threaded portion 32A, to gradually decrease in diameter from a distal end opening toward the minimum inner diameter portion 32D. A vent hole 33 that passes through the valve stem 30A in a direction perpendicular to the axial direction is provided in the valve stem 30A between the female threaded portion 32B and the above-described male threaded portion 31J on the outer surface.

The valve stem 30A of the present embodiment is made of metal, but may be made of any material other than metal, such as resin, as long as it is rigid. In addition, the shape of the outer surface and inner surface of the valve stem 30A is not limited to the above shape.

The valve core 20 is, for example, a general-purpose component commonly used in various tire valves, and has the following structure. That is, the valve core 20 includes a support cylindrical portion 21, a movable shaft 24 passing through the support cylindrical portion 21, and a compression coil spring (not illustrated). The support cylindrical portion 21 has a structure in which a cylindrical head portion 23 is rotatably connected to one end portion of a cylindrical base portion 22. A bridge portion 23B that straddles an opening of the cylindrical head portion 23 is provided on an end surface of the cylindrical head portion 23 that is disposed opposite to the cylindrical base portion 22, and a through hole (not illustrated) is formed in the bridge portion 23B coaxially with the central axis of the cylindrical head portion 23. A threaded portion 23N is formed on an outer side surface of the cylindrical head portion 23. An outer diameter of the cylindrical base portion 22 is gradually reduced with increasing distance from the cylindrical head portion 23.

The movable shaft 24 passes through the support cylindrical portion 21, and its both end portions protrude from the support cylindrical portion 21. A flange portion having a thin plate structure is provided at one end portion of the movable shaft 24 protruding from the cylindrical base portion 22, and a seal member (not illustrated) is received inside the flange portion to form a valve body 24A. A spring presser flange 24C is provided at the other end portion of the movable shaft 24. The compression coil spring (not illustrated) placed onto the movable shaft 24 is sandwiched between the bridge portion 23B and the spring presser flange 24C, and the valve body 24A is pressed against an end surface opening of the support cylindrical portion 21 by a resilient force of the compression coil spring.

The valve core 20 is inserted from the distal end side of the valve stem 30A, and is attached in a state where an outer side surface of the cylindrical base portion 22 and an inner side surface of the valve stem 30A are in close contact with each other (so-called metal seal state) by threaded engagement between the threaded portion 23N of the cylindrical head portion 23 and the female threaded portion 32A of the valve stem 30A. The valve core 20 allows passage of a fluid from the distal end side to the proximal end side of the valve stem 30A, and prohibits passage of a fluid in the opposite direction.

The press-fit member 40A has a cylindrical shape that covers, from the lateral side, the valve stem 30A from a proximal end portion of the distal end-side large-diameter portion 31A to an intermediate position of the second medium-diameter portion 31H, for example. The press-fit member 40A is made of vulcanized rubber, and is formed by molding on the outer side of the valve stem 30A and bonded to the valve stem 30A by vulcanization. An inner surface of the press-fit member 40A in a range from an intermediate position of the first medium-diameter portion 31G to a position near a proximal end forms a medium-diameter hole portion 49A slightly larger than the first medium-diameter portion 31G, and a gap is formed between the medium-diameter hole portion 49A and the outer surface of the valve stem 30A. In a proximal end surface of the press-fit member 40A, a central recessed portion 49B is formed by recessing its central portion in a stepped shape, to decrease in diameter in a stepped manner from the central recessed portion 49B toward the medium-diameter hole portion 49A.

An outer side surface of the press-fit member 40A includes a small-diameter portion 41, a tapered portion 42, a triangular ridge 43, a fitting portion 44, and a proximal end-side flange portion 45 in this order from the distal end side. The small-diameter portion 41 has an outer diameter slightly larger than that of the proximal end portion of the distal end-side large-diameter portion 31A of the valve stem 30A and extends to a position before the flange 31F. The fitting portion 44 has a larger outer diameter than the outer diameter of the small-diameter portion 41, and the proximal end-side flange portion 45 further has a larger outer diameter than the outer diameter of the fitting portion 44. The tapered portion 42 is gradually enlarged in diameter from a proximal end of the small-diameter portion 41 toward a distal end portion of the fitting portion 44. A proximal end of the tapered portion 42 is slightly larger than the fitting portion 44 and is then slightly reduced in diameter in a tapered shape toward the fitting portion 44 to form the triangular ridge 43 that slightly protrudes from the distal end of the fitting portion 44. A step surface 45D between the fitting portion 44 and the proximal end-side flange portion 45 is recessed in an annular groove shape to form a thin lip 45L at an outer edge portion.

The tire valve body 10X is press-fitted into a valve mounting hole 92 of a wheel 90 as follows. That is, as illustrated in FIG. 1, the valve mounting hole 92 passes through, for example, a position near a cylindrical portion 91A that is parallel to the central axis of a rim 91 of the wheel 90 in a tapered portion 91B protruding obliquely laterally from an outer edge portion of the cylindrical portion 91A. An inner edge portion of a tire 94 engages with an outer edge portion of the tapered portion 91B disposed away from the cylindrical portion 91A.

The distal end side of the tire valve body 10X is inserted into the valve mounting hole 92 on the inner surface side of the rim 91. Then, the tapered portion 42 of the press-fit member 40A abuts on an opening edge of the valve mounting hole 92. When the tire valve body 10X is further pushed into the valve mounting hole 92, a portion of the press-fit member 40A on the proximal end side from the tapered portion 42 is axially extended and deformed to be reduced in diameter, and the tapered portion 42 is press-fitted into the valve mounting hole 92 as illustrated in FIG. 1. Then, the step surface 45D of the proximal end-side flange portion 45 abuts on the inner surface of the rim 91, and the tire valve body 10X is positioned with respect to the wheel 90. In this state, a portion of the fitting portion 44 of the press-fit member 40A disposed outside the rim 91 forms a tapered surface portion 46 that is continuous from the triangular ridge 43, and an intermediate flange portion 47 including the tapered portions 42 and 46 with their backs to each other is formed. Since the press-fit member 40A is extended as described above at the time of press-fitting, the proximal end surface of the press-fit member 40A is disposed at a position before the vent hole 33.

The valve stem 30A of the present embodiment is made of vulcanized rubber, but may be made of any material other than vulcanized rubber, such as soft resin, as long as it is an elastomer.

The state monitoring device 60 has a structure in which a circuit board (not illustrated) on which a pressure sensor, a temperature sensor, and a wireless circuit are mounted and a battery are packaged in a housing 61 illustrated in FIG. 2. An attachment hole 62 passes through the housing 61, and one end side of the attachment hole 62 is reduced in diameter in a stepped manner. The proximal end portion of the valve stem 30A is inserted into the large diameter side of the attachment hole 62, an end surface of the valve stem 30A is brought into abutment with a step surface of the attachment hole 62, and a bolt 63 inserted into the attachment hole 62 from the small diameter side is fastened to the female threaded portion 32B of the valve stem 30A, whereby the state monitoring device 60 is fixed to the proximal end portion of the valve stem 30A.

The fixation of the state monitoring device 60 to the valve stem 30A is not limited to the above structure. For example, a male threaded portion may be formed on an outer surface of the proximal end portion of the valve stem 30A, and a female threaded portion to be threadedly engaged with the male threaded portion may be provided on the state monitoring device 60. In addition, although the tire valve 10A of the present embodiment includes the state monitoring device 60, the tire valve 10A does not have to include the state monitoring device 60.

The tilt restriction member 50A is made of, for example, metal, has a cup shape as illustrated in FIG. 2, and includes a female threaded portion 54N at a center portion of a bottom portion 52 in the cup shape. The female threaded portion 54N is threadedly engaged with the male threaded portion 31J of the valve stem 30A. That is, the female threaded portion 54N serves as a "retaining-fixing portion" that engages with the valve stem 30A in a state preventing disengagement. The tilt restriction member 50A is attached so as to cover the proximal end-side flange portion 45 of the press-fit member 40A that has been press-fitted into the valve mounting hole 92. Hereinafter, a specific structure of the tilt restriction member 50A will be described by assuming that the press-fit member 40A has been press-fitted into the valve mounting hole 92.

As illustrated in FIG. 1, the tilt restriction member 50A includes an outer cylindrical portion 53 that covers a side surface of the proximal end-side flange portion 45, the bottom portion 52 that covers a proximal end surface of the proximal end-side flange portion 45, and a central bulging portion 55 that protrudes in a stepped shape from a central portion of the bottom portion 52 into the outer cylindrical portion 53. The female threaded portion 54N is formed at a center portion of the central bulging portion 55. The female threaded portion 54N is threadedly engaged with the male threaded portion 31J of the valve stem 30A, and a distal end surface of the outer cylindrical portion 53 is laid on the inner surface of the rim 91. For example, an inner surface of the outer cylindrical portion 53 is in close contact with the outer side surface of the proximal end-side flange portion 45, and the central bulging portion 55 is loosely fitted into the central recessed portion 49B. Substantially half of the vent hole 33 is located on the proximal end side of the valve stem 30A with respect to the tilt restriction member 50A, and substantially half of the vent hole 33 is received inside the central bulging portion 55 to face a gap between the central bulging portion 55 and the valve stem 30A.

The tilt restriction member 50A of the present embodiment is made of metal, but may be made of any non-metal material, such as resin or ceramics, as long as it is rigid. The tilt restriction member 50A includes the female threaded portion 54N that is threadedly engaged with the male threaded portion 31J of the valve stem 30A as the "retaining-fixing portion", but the retaining-fixing portion for fixing the tilt restriction member 50A to the valve stem 30A in a state to prevent disengagement is not limited thereto. For example, a press-fit portion to be press-fitted and fixed to the valve stem 30A may be provided in the tilt restriction member 50A as the "retaining-fixing portion", or a portion fixed to the valve stem 30A by an adhesive or by welding may be provided in the tilt restriction member 50A as the "retaining-fixing portion". In addition, in the tilt restriction member 50A of the present embodiment, the outer cylindrical portion 53 is in close contact with (that is, press-fitted over) the outer surface of the proximal end-side flange portion 45, and the central bulging portion 55 is loosely fitted into the central recessed portion 49B. However, the outer cylindrical portion 53 may be loosely fitted to the proximal end-side flange portion 45, and the central bulging portion 55 may be press-fitted into the central recessed portion 49B, or both of them may be loosely fitted, or may be press-fitted. With a configuration in which the tilt restriction member 50A is at least partially press-fitted over the press-fit member 40A, loosening of the threaded engagement between the male threaded portion 31J and the female threaded portion 54N can be prevented, and with a configuration in which the entire tilt restriction member 50A is loosely fitted to the press-fit member 40A, the tilt restriction member 50A is easily attached.

The structure of the tire valve 10A of the present embodiment has been described above. Next, the operational effects of the tire valve 10A will be described. As described above, in the tire valve 10A of the present embodiment, the press-fit member 40A covering the valve stem 30A is press-fitted into the valve mounting hole 92 of the wheel 90 in a state where the tilt restriction member 50A and the state monitoring device 60 are removed from the tire valve body 10X. Thereafter, the tilt restriction member 50A and the state monitoring device 60 are mounted on the valve stem 30A inside the rim 91. As illustrated in FIG. 2, the tilt restriction member 50A and the state monitoring device 60 may be mounted on the valve stem 30A in advance, and then the press-fit member 40A of the tire valve 10A may be press-fitted into the valve mounting hole 92.

When a vehicle to which the wheel 90 is attached travels, a centrifugal force generated by rotation of the wheel 90 acts on the tire valve 10A. Even if the centrifugal force acts to tilt the tire valve 10A, the tilt restriction member 50A abuts on the rim 91 to restrict tilting of the tire valve 10A, and the tire valve 10A is stably fixed to the rim 91. In addition, since the tilt restriction member 50A is fixed in the state to be prevented from disengagement by the threaded engagement between the female threaded portion 54N and the male threaded portion 31J of the valve stem 30A, the tilt restriction member 50A and the press-fit member 40A cooperate to prevent the tire valve 10A from coming off from the rim 91, which also increases the retaining strength of the tire valve 10A with respect to the rim 91. Furthermore, since the tilt restriction member 50A is disposed inside the rim 91, the tilt restriction member 50A is protected from collision with foreign matter and has excellent durability.

In addition, since the tilt restriction member 50A has a cup shape, the tilt restriction member 50A can restrict tilting of the tire valve 10A in all directions with respect to the rim 91, and has higher strength than that of a case where the tilt restriction member has a cantilever shape, for example. Moreover, since the tilt restriction member 50A has a cup shape covering the proximal end-side flange portion 45, the tire valve 10A can be prevented from increasing in volume due to providing the tilt restriction member 50A.

In addition, since the outer cylindrical portion 53 of the tilt restriction member 50A is in close contact with and frictionally engages with the proximal end-side flange portion 45, loosening of the threaded engagement between the female threaded portion 54N and the male threaded portion 31J is prevented, and the position of the tilt restriction member 50A with respect to the valve stem 30A is stabilized, so that the tilt restriction by the tilt restriction member 50A is also stabilized.

In the tire valve 10A of the present embodiment, since the state monitoring device 60 is attached to the proximal end portion and the influence of the centrifugal force is increased, the above-described effects of the tilt restriction by the tilt restriction member 50A become greater than those of a case where the state monitoring device 60 is not attached. In addition, the tilt restriction member 50A is provided with the central bulging portion 55, and at least a part of the vent hole 33 passing through the valve stem 30A between inside and outside is disposed to face the gap between an inner side surface of the central bulging portion 55 and the valve stem 30A, so that the vent hole 33 can be located closer to the distal end side of the valve stem 30A, and the valve stem 30A can be correspondingly shortened. This makes it possible to reduce the influence of the centrifugal force received by the state monitoring device 60.

### [Second embodiment]

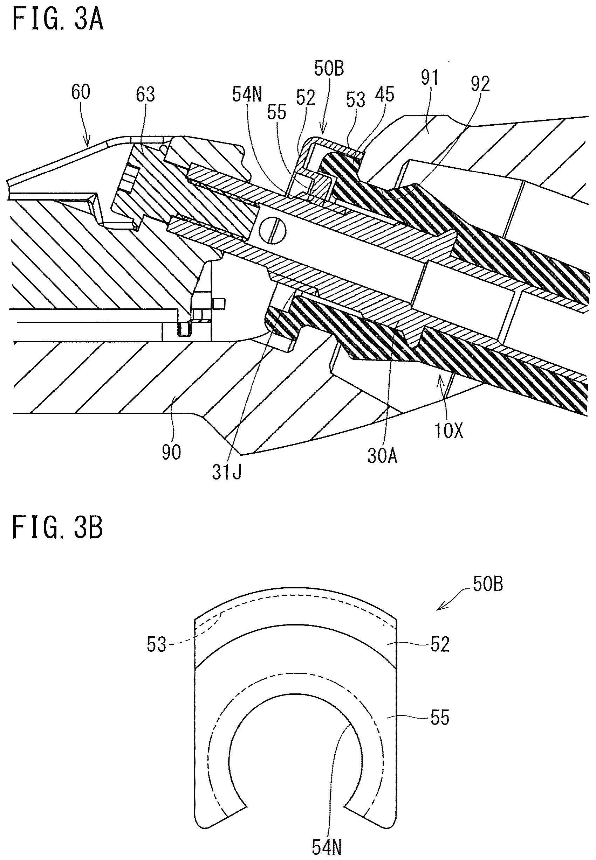

The present embodiment is illustrated in FIGS. 3A and 3B, and is different from the first embodiment in the structure of a tilt restriction member 50B. The tilt restriction member 50B has a structure in which a part of the tilt restriction member 50A of the first embodiment is removed. Specifically, for example, in a center portion of the tilt restriction member 50B, the part of the tilt restriction member 50A in a range where the female threaded portion 54N is threadedly engaged with the male threaded portion 31J in a retained state is not removed, and the bottom portion 52 and the outer cylindrical portion 53 cover only an upper portion of the proximal end-side flange portion 45 in FIG. 3A.

### [Third embodiment]

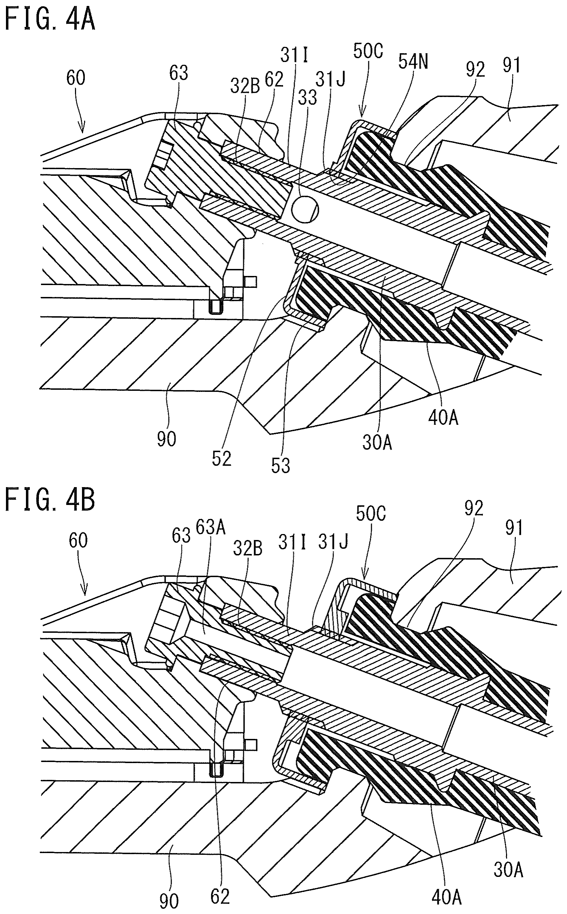

The present embodiment is illustrated in FIG. 4A, and the vent hole 33 is formed across the male threaded portion 31J and the proximal end-side small-diameter portion 31I of the valve stem 30A. In addition, a tilt restriction member 50C of the present embodiment has a structure in which the central bulging portion 55 is not provided and the female threaded portion 54N is provided at the center portion of the bottom portion 52.

### [Fourth embodiment]

The present embodiment is illustrated in FIG. 4B, and the vent hole 33 laterally passing through the valve stem 30A is not provided, but a vent hole 63A is formed to pass through a center portion of the bolt 63 for fixing the state monitoring device 60 to the valve stem 30A. Also. A tilt restriction member 50C similar to that of the third embodiment is attached to the valve stem 30A. According to the present embodiment, since the vent hole 33 laterally passing through the valve stem 30A is not provided, the valve stem 30A can be correspondingly shortened.

### [Fifth embodiment]

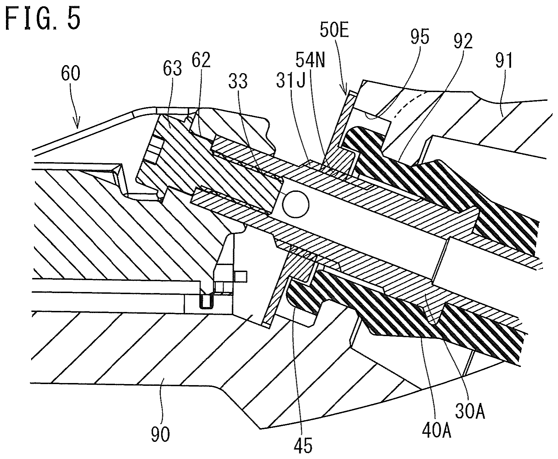

The present embodiment is illustrated in FIG. 5, and has a structure in which a tilt restriction member 50E includes the female threaded portion 54N at a center portion of a disk. In addition, a counterbore hole 95 concentric with the valve mounting hole 92 is formed in the inner surface of the rim 91. The proximal end-side flange portion 45 of the press-fit member 40A is received in the counterbore hole 95, and an outer edge portion of the tilt restriction member 50E abuts on an opening edge of the counterbore hole 95. Instead of providing the counterbore hole 95, one or a plurality of protrusions facing the proximal end-side flange portion 45 from the lateral side may be provided on the inner surface of the rim 91, and the outer edge portion of the tilt restriction member 50E may abut on the protrusion or the protrusions.

### <Note>

Hereinafter, a feature group extracted from the above embodiments will be described while showing the effects and the like as necessary. In the following, for easy understanding, corresponding configurations in the above embodiments will be appropriately indicated in parentheses or the like, but this feature group is not limited to the specific configurations indicated in the parentheses or the like.

### [Feature 1]

A tire valve (10A) including: a valve stem (30A) configured to house a valve core (20); a press-fit member (40A) made of an elastomer configured to cover an outer side surface of the valve stem (30A) and to be press-fitted into a valve mounting hole (92) of a rim (91) of a wheel (90) from an inner surface side of the rim (91) so as to be attached in a state of passing through the rim (91) from inside to outside; and a tilt restriction member (50A to 50C, 50E) including a retaining-fixing portion (54N) fixed to the valve stem (30A) so as to be prevented from disengagement, the tilt restriction member (50A to 50C, 50E) being partially laid on the inner surface of the rim (91).

### [Feature 2]

The tire valve (10A) according to the feature 1, including:
a male threaded portion (31J) formed on an outer surface of the valve stem (30A); and
a female threaded portion (54N) as the retaining-fixing portion (54N) formed on the tilt restriction member (50A to 50C, 50) and threadedly engaged with the male threaded portion (31J).

### [Feature 3]

The tire valve (10A) according to the feature 1 or 2, wherein the press-fit member (40A) includes a proximal end-side flange portion (45) having an outer diameter larger than the valve mounting hole (92) and facing the inner surface of the rim (91), the tilt restriction member (50A) has a cup shape that covers the proximal end-side flange portion (45) of the press-fit member (40A) in a state of being press-fitted into the valve mounting hole (92), and the retaining-fixing portion (54N) is disposed at the center of a bottom portion (52) in the cup shape.

### [Feature 4]

The tire valve (10A) according to the feature 3, wherein the tilt restriction member (50A) is loosely fitted over the proximal end-side flange portion (45).

### [Feature 5]

The tire valve (10A) according to the feature 3, wherein the tilt restriction member (50A) is press-fitted over the proximal end-side flange portion (45).

### [Feature 6]

The tire valve (10A) according to any one of the features 3 to 5, wherein a central recessed portion (49B) obtained by recessing a central portion of a proximal end surface of the proximal end-side flange portion (45) is provided, the tilt restriction member (50A) includes a central bulging portion (55) bulging from the bottom portion (52) in the cup shape into the central recessed portion (49B) and having the retaining-fixing portion (54N) at a center portion, and at least a part of a vent hole (33) passing through the valve stem (30A) between inside and outside is disposed to face a gap between an inner side surface of the central bulging portion (55) and the valve stem (30A).

### [Feature 7]

The tire valve (10A) according to any one of the features 1 to 6, including a state monitoring device (60) attached to a proximal end portion of the valve stem (30A) to monitor a state in a tire (94).

### [Feature 8]

A tilt restriction member (50A to 50C, 50E) used for the tire valve (10A) according to any one of the features 1 to 7.

In the tire valve of the feature 1, the press-fit member made of an elastomer configured to cover the valve stem is press-fitted into the valve mounting hole of the rim of the wheel to be attached to the wheel. The tilt restriction member is fixed to the valve stem so as to be prevented from disengagement, and is partially laid on the inner surface of the rim, so that tilting of the tire valve is restricted and the tire valve is stably fixed to the rim. In addition, since the tilt restriction member is fixed to the valve stem so as to be prevented from disengagement, the tilt restriction member and the press-fit member cooperate to prevent the tire valve from coming off outward from the rim, which also increases the retaining strength of the tire valve with respect to the rim. Furthermore, since the tilt restriction member is disposed inside the rim, the tilt restriction member is protected from collision with foreign matter and has excellent durability.

The retaining-fixing portion of the tilt restriction member to be fixed to the valve stem so as to be prevented from disengagement may be a press-fit portion press-fitted over the valve stem, a bonded portion bonded to the valve stem by an adhesive, a welded portion fixed by welding, or the female threaded portion threadedly engaged with the male threaded portion of the valve stem as in the feature 2.

The tilt restriction member may have a structure in which the tilt restriction member extends laterally from the valve stem in a cantilever shape and is then bent to be brought into abutment with the inner surface of the rim, or may have a cup shape as in the feature 3. When the tilt restriction member has a cup shape as in the feature 3, the tilt restriction member can restrict tilting of the tire valve in all directions with respect to the rim, and has higher strength. Moreover, when the tilt restriction member has a cup shape covering the proximal end-side flange portion as in the feature 3, the tire valve can be prevented from increasing in volume due to providing the tilt restriction member.

When the tilt restriction member is configured to be loosely fitted to the proximal end-side flange portion as in the tire valve of the feature 4, the tilt restriction member is easily attached. In addition, when the tilt restriction member is configured to be press-fitted over the proximal end-side flange portion as in the tire valve of the feature 5, frictional engagement between the tilt restriction member and the proximal end-side flange portion assists in preventing disengagement by the engagement of the retaining-fixing portion, and the tilt restriction by the tilt restriction member is stabilized.

The tilt restriction member of the feature 6 includes the central bulging portion bulging into the central recessed portion of the proximal end surface of the proximal end-side flange portion, and at least a part of the vent hole passing through the valve stem between inside and outside is disposed to face the gap between the inner side surface of the central bulging portion and the valve stem, so that the vent hole can be located closer to the distal end side of the valve stem, and the valve stem can be correspondingly shortened.

In a case where the state monitoring device for monitoring the state in the tire is attached to the proximal end portion of the valve stem as in the tire valve of the feature 7, a centrifugal force becomes large, so that the above-described effects of the tilt restriction by the tilt restriction member become greater than those of a case where the state monitoring device is not attached.

Although specific examples of the technique included in the claims are disclosed in the present specification and the drawings, the technique described in the claims is not limited to these specific examples, and includes those obtained by variously modifying or changing the specific examples, and also includes those obtained by singly extracting part from the specific examples.

### DESCRIPTION OF THE REFERENCE NUMERALS

- 10A: Tire valve
- 10X: Tire valve body
- 20: Valve core
- 30A: Valve stem
- 31J: Male threaded portion
- 33: Vent hole
- 36: Cap
- 40A: Press-fit member
- 45: Proximal end-side flange portion
- 49B: Central recessed portion
- 50A to 50C, 50E: Tilt restriction member
- 54N: Female threaded portion (retaining-fixing portion)
- 55: Central bulging portion
- 60: State monitoring device
- 90: Wheel
- 91: Rim
- 92: Valve mounting hole
- 94: Tire

## Claims

1. A tire valve comprising:
a valve stem configured to house a valve core;
a press-fit member made of an elastomer configured to cover an outer side surface of the valve stem and to be press-fitted into a valve mounting hole of a rim of a wheel from an inner surface side of the rim so as to be attached in a state of passing through the rim from inside to outside; and
a tilt restriction member including a retaining-fixing portion fixed to the valve stem so as to be prevented from disengagement, the tilt restriction member being partially laid on the inner surface of the rim.

2. The tire valve according to claim 1, comprising:
a male threaded portion formed on an outer surface of the valve stem; and
a female threaded portion as the retaining-fixing portion formed on the tilt restriction member and threadedly engaged with the male threaded portion.

3. The tire valve according to claim 1 or 2, wherein
the press-fit member includes a proximal end-side flange portion having an outer diameter larger than the valve mounting hole and facing the inner surface of the rim,
the tilt restriction member has a cup shape that covers the proximal end-side flange portion of the press-fit member in a state of being press-fitted into the valve mounting hole, and the retaining-fixing portion is disposed at a center of a bottom portion in the cup shape.

4. The tire valve according to claim 3, wherein the tilt restriction member is loosely fitted over the proximal end-side flange portion.

5. The tire valve according to claim 3, wherein the tilt restriction member is press-fitted over the proximal end-side flange portion.

6. The tire valve according to any one of claims 3 to 5, wherein
a central recessed portion obtained by recessing a central portion of a proximal end surface of the proximal end-side flange portion is provided,
the tilt restriction member includes a central bulging portion bulging from the bottom portion in the cup shape into the central recessed portion and having the retaining-fixing portion at a center portion, and
at least a part of a vent hole passing through the valve stem between inside and outside is disposed to face a gap between an inner side surface of the central bulging portion and the valve stem.

7. The tire valve according to any one of claims 1 to 6, comprising a state monitoring device attached to a proximal end portion of the valve stem to monitor a state in a tire.

8. A tilt restriction member used for the tire valve according to any one of claims 1 to 7.
